# EUROPEAN PATENT APPLICATION

(11) **EP 3 318 964 A1**
(43) Date of publication of application: **09.05.2018**
(21) Application number: 17200234.7
(22) Date of filing: 07.11.2017
(51) Int. Cl.: G06F 3/0484

(54) **METHOD, COMPUTER PROGRAM PRODUCT, COMPUTER READABLE MEDIUM, COMPUTER SYSTEM AND ELECTRONIC APPARATUS FOR ASSOCIATING VISUAL INDICATION OF EMOTION EXPERIENCED BY USER IN RESPONSE TO EMOTION-CAUSING OBJECT OR EVENT WITH DIGITAL OBJECT**

(30) Priority: 07.11.2016 FI 20165833
(71) Applicant: NayaDaya Oy, 15140 Lahti (FI)
(72) Inventor: Järvinen, Timo, 15140 Lahti (FI)
(74) Representative: Berggren Oy, Helsinki & Oulu

(57) **Abstract**

The present invention is a method for associating a visual indication (610) of an emotion with a digital object (410A) representing the emotion-causing object or event. The method comprises obtaining or receiving (120) the digital object (410A) at an electronic apparatus (200), visually indicating (130) the obtained or received digital object (410A) to the user, providing (140) a virtual rotatable selection object (430) to the user for selecting a type of emotion from a plurality of predefined types of emotion, capturing (150) a user selection of the type of emotion among said plurality of predefined types of emotion via the control input interface (240), and associating (160) the captured user selection of the type of emotion with the obtained or received digital object, wherein the association comprises at least an identifier (450) of the selected type of emotion.

## Description

### TECHNICAL FIELD

The invention concerns in general the technical field of associating information with digital objects. Especially the invention concerns associating information related to an emotion experienced by a user in response to an emotion-causing object or event with a digital object.

### BACKGROUND

It is known to use smileys, emojis or emoticons to visually indicate a feeling or an emotion to another person via digital messaging. In some attempts smileys are associated with a digital photo on a website in order to associate the perceived feeling or emotion represented by the smiley with the digital photo.

In face-to-face interactions between two persons, it's easy to recognize other people's emotions through verbal expression and also from facial expressions, gestures, and body posture. In communication via digital social media, however, this information is easily lost. Current emojis are overly simplified versions of diverse human inner experiences, because smileys, emojis or emoticons do not represent real fascial expression but rather an approximate indication of the type of emotion, such as negative or positive. Different people can easily interpret the emotion represented by a smiley or emoji very differently with respect to each other. It is also difficult to distinct between two types of emotion which are quite similar by using smileys or emojis. Thus, only a few different classes of emotions may be presented by smileys because they give only a rough indication of the type of emotion.

There is, thus, still a need to develop a method for indicating an emotion perceived by a person with respect to an object or event to another person such that another person can interpret the indicated emotion as closely as possible to what is meant by the person. A need exists for a method suitable for collecting emotion-related data, such as big data or for the person himself in order to learn about of him/herself based on the data, from people having different cultural and language backgrounds more profoundly than by using smileys or emojis, because they do not correspond to the actual experienced emotions very well.

### SUMMARY

An objective of the invention is to provide a method, computer program products, computer readable media, computer systems and electronic apparatuses for associating a visual indication of an emotion experienced by a user in response to an emotion-causing object or event with a digital object representing the emotion-causing object or event. Another objective of the invention is that the method, computer program products, computer readable media, computer systems and electronic apparatuses for associating a visual indication of an emotion experienced by a user in response to an emotion-causing object or event with a digital object representing the emotion-causing object or event indicate the emotion to another user as close to the experienced emotion as possible.

The objectives of the invention are reached by a method, a computer program product, a computer readable medium, a computer system and an electronic apparatus as defined by the respective independent claims.

According to a first aspect, a method, preferably performed on an electronic apparatus, such as on a mobile terminal, for associating a visual indication of an emotion experienced by a user in response to an emotion-causing object or event with a digital object representing the emotion-causing object or event is provided. The method comprises
obtaining or receiving the digital object, preferably at the electronic apparatus comprising at least a processor, a memory, a control input interface and a display,
visually indicating the obtained or received digital object to the user, preferably, via the display,
providing a virtual, preferably rotatable, selection object to the user, preferably via the display, for selecting a type of emotion from a plurality of predefined types of emotion,
capturing a user selection of the type of emotion among said plurality of predefined types of emotion, preferably via the control input interface, and
associating the captured selection of the type of emotion with the obtained or received digital object, wherein the association comprises at least an identifier, such as the unique name, of the selected type of emotion.

The term "associating", when used herein in connection with describing an aspect and/or an embodiment of the present invention, refers to associating by technical means, for example but not limited to, visually or as metadata.

The associating may comprise associating by at least one of the following: as metadata of the digital object, as integrated into a data structure of the digital object, such as into a bitmap image thus becoming an integral part of the data structure i.e. a digital image.

Each one of the plurality of predefined types of emotion may be represented at least by a unique name of the type of emotion.

The number of the plurality of predefined types of emotion may preferably be more than ten.

The control input interface and the display may, for example, be integrated such as in case of a touchscreen.

The method may comprise providing a virtual rotatable selection object to the user via the display for selecting an intensity of emotion from a plurality of predefined levels of intensity of emotion, capturing a user selection of the intensity of emotion among said plurality of predefined levels of intensity of emotion via the control input interface, and associating the captured user selection of the intensity of emotion with the obtained or received digital object, wherein the association of the intensity of emotion comprises at least a second identifier, such as the level or the category of the selected intensity of emotion. Preferably, the providing of the virtual rotatable selection object to the user, preferably via the display, for selecting an intensity of emotion may be performed after the visually indicating and prior to the associating.

The method may comprise pre-determining at least one of the following: the type of emotion, the intensity of emotion. Preferably, the pre-determining may be performed after the obtaining or receiving and prior to the providing a virtual rotatable selection object to the user via the display for selecting the type or the intensity of the emotion.

Each one of the plurality of predefined types of emotion may further be represented by a unique predefined color.

The virtual rotatable selection object may comprise a visual indicator arranged in a position around the perimeter of the virtual, preferably rotatable, selection object for indicating the user's current selection of the type of emotion. Preferably, the position around the perimeter of the virtual rotatable selection object for indicating the user's current selection of the type of emotion may be one of a plurality of first predefined positions.

Each one of the first predefined positions may correspond exclusively to one of the plurality of predefined types of emotion.

The virtual rotatable selection object may comprise a visual indicator arranged in a position around the perimeter of the virtual rotatable selection object for indicating the user's current selection of the intensity of emotion. Preferably, the position may be one of a plurality of second predefined positions.

Each one of the second predefined positions may preferably correspond exclusively to one of a plurality of levels of the intensity of emotion.

A number of the plurality of first predefined positions and a number of the plurality of second predefined positions may be the same and the positions around the perimeter may be the same.

The obtaining or receiving may comprise obtaining or receiving the digital object as or along with at least one of the following: an image or a photo, a video, an audio, a uniform resource locator, a push notification, a message, a piece of news, a hologram, a multimedia presentation.

The method may comprise, preferably after the associating the selected type of emotion with the obtained or received digital object, sharing the emotion-associated digital object with other users, for example, via a social networking platform.

The sharing may comprise transmitting emotion-associated digital object via a communication network for one of the following: publishing on a social networking platform, sending via email, sending as a digital short message, such as on an instant messaging platform or as a text message.

The method may comprise, preferably after the sharing, associating, or at least a capability for the association, of an indication of empathy, for example experienced with respect to the emotion-causing object or event represented by the digital object or the type of emotion associated, with the shared emotion-associated digital object. The indication of empathy may be a visual or a metadata type of indication.

The pre-determining may performed automatically in response to an input from an emotion sensing system or device, such as one based on facial emotion recognition using facial expressions, movement or body gesture emotion recognition, measurement of biosensors monitoring physiological parameters of the body, or determining the type of emotion by a voice recognition technique.

The types of emotion may be disposed on the virtual, preferably rotatable, selection object such that negative types may be on one side and positive types on the other side of the virtual, preferably rotatable, selection object with respect to a line crossing the center of the virtual, preferably rotatable, selection object.

The method may further comprise associating an indication of at least one of the following with the obtained or received digital object: a position of the electronic apparatus, a time, a date.

According to a second aspect, a computer program product comprising program code means adapted to execute the method items according to the first aspect when the program is run on a computer is provided.

According to a third aspect, a non-transitory computer-readable medium comprising the computer program product according to the second aspect is provided.

According to a fourth aspect, a computer system comprising at least one processor, and at least one memory storing at least one portion of computer program code, wherein the at least one processor being configured to cause the computer system at least to perform the steps of the method according to the first aspect.

According to a fifth aspect, an electronic apparatus, such as a mobile terminal, comprises a processor, a memory, and a display, the processor being configured to execute the method according to the first aspect. The mobile terminal may be, for example, a smartphone, a tablet, a phablet, or a laptop.

The exemplary embodiments of the present invention presented herein are not to be interpreted to pose limitations to the applicability of the appended claims. The verb "to comprise" is used in this patent application as an open limitation that does not exclude the existence of also un-recited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objectives and advantages thereof, will be best understood from the following description of specific embodiment of the present inventions when read in connection with the accompanying drawings.

### BRIEF DESCRIPTION OF FIGURES

The embodiments of the present invention are illustrated by way of example, and not by way of limitation, in the figures of the accompanying drawings.
Figures 1A and 1B illustrate flow diagrams of methods according to some embodiments of the present invention.
Figure 2 illustrates schematically an environment in which an embodiment of the present invention may be utilized.
Figure 3 illustrates a flow diagram of a method according to an embodiment of the present invention.
Figures 4A-4D illustrate some steps in accordance with an embodiment of the present invention.
Figure 5 illustrates selection of the intensity of emotion according to an embodiment of the present invention.
Figure 6 illustrates an emotion-associated digital object emotion according to an embodiment of the present invention.

### DESCRIPTION OF SOME EMBODIMENTS

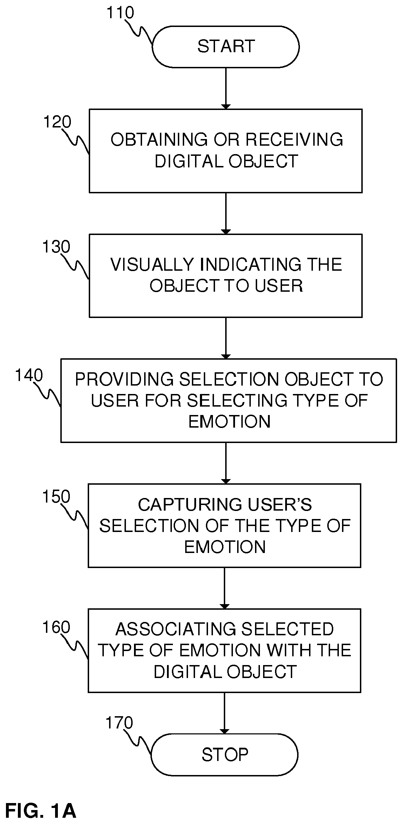

Figure 1A illustrates a flow diagram of a method according to an embodiment of the present invention. Item 110 refers to a start-up phase of the method. In the start-up phase 110 appropriate technical equipment suitable for executing the method may be obtained and configured. Obtaining the technical equipment may include obtaining an electronic apparatus such as a mobile terminal. The electronic apparatus may, preferably, comprise at least one processor, one memory, one control input interface and one display. The control input interface and the display may be comprised essentially in one element such as in case of a touchscreen. The control input interface may also be a computer mouse or a keyboard or any other means for controlling the operation of the electronic apparatus.

According to an embodiment of the present invention, the technical equipment in general may comprise a display such as a two-dimensional (2D) display screen, a three-dimensional (3D) display, for example 3D glasses, or a holographic display. At 110, the technical equipment may further be configured to execute the rest of the method steps according to an embodiment of the present invention.

At 120, the digital object representing an emotion-causing event or object may be obtained or received at the electronic apparatus.

According to an embodiment of the present invention, the digital object representing an emotion-causing event or object may be an image or a photo, a video, an audio, a uniform resource locator (URL), a push notification, a message, a piece of news, a hologram, a multimedia presentation. According to an embodiment of the present invention, the emotion-causing event or object may be an image or a photo, a video, an audio, a real-life event, a real-life object. The emotion-causing event or object may be, for example, a content of a photo, a photo of a person, a concert or a book or any other event or object causing an emotion or an emotional reaction perceived by the user.

According to an embodiment of the present invention, the digital object may represent the emotion-causing event or object essentially in a direct manner, for example, the digital object may be obtained or received as a digital photo of a person or event, i.e., of an emotion-causing event or object.

According to an embodiment of the present invention, the digital object may be representing the emotion-causing event or object in an indirect manner, for example, the digital object, with which the visual indication may be associated with, may be obtained or received along with an audio. According to another embodiment of the present invention, the digital object may be a push notification representing an emotion-causing event obtained or received during the event, for example, once or several times, such as during a concert or a particular song presented in the concert or a theatre performance or a movie. According to still another embodiment of the present invention, the digital object may represent an emotion-causing object, such as a website or a particular piece of news published on the website or similar, obtained or received along with a URL.

At 130, in Fig. 1A, the obtained or received digital object may be visually indicated to the user via the display.

According to an embodiment of the present invention, the display may be a 2D display screen, a 3D display or a holographic display for visually indicate the obtained or received digital object to the user.

At 140, a virtual, preferably rotatable, selection object may be provided to the user via the display for selecting a type of emotion from a plurality of predefined types of emotion.

According to an embodiment of the present invention, each one of the plurality of predefined types of emotion may be represented at least by a unique name of the type of emotion. The unique name of the emotion may, preferably, be the name of the emotion in the written form in a language, such as in the language determined by the user.

According to an embodiment of the present invention, the unique name of the emotion may be displayed to the user along with the virtual selection object. Said displaying may, preferably, include displaying the unique name of the type of emotion corresponding to the current selection of the type of emotion by the user.

According to an embodiment of the present invention, a virtual rotatable selection object may be a circle-shaped selection object which may be rotated to change the selection regarding the type of emotion. The rotation may be performed by the user by using the control input interface such as a touchscreen, a wireless remote controller, such as utilizing gestures, e.g., eye or hand gestures, a computer mouse or a keyboard. The virtual rotatable selection object, such as described above, i.e., without a starting or an ending point, corresponds well to the concept that different types of emotions are all equal in value and cannot be arranged to form a list from the best to the worst.

At 150, a user selection of the type of emotion among said plurality of predefined types of emotion via the control input interface may be captured.

At 160, the captured selection of the type of emotion may be associated with the obtained or received digital object.

According to an embodiment of the present invention, the association comprises at least an identifier of the selected type of emotion. According to an embodiment of the present invention, the method may comprise associating an indication of at least one of the following with the obtained or received digital object: a position of the electronic apparatus, a time, a date. The position may be determined, for example, by a global positioning system sensor comprised in the electronic apparatus.

According to an embodiment of the present invention, the identifier may be associated with the digital object as metadata or as a visual indication such as a "stamp" on a digital photo thus becoming an integral part of the data structure such as a bitmap or jpeg-image. According to an embodiment comprising the identifier as metadata, the visual indication of the emotion may be provided, for example, in a further step at the electronic apparatus or in a social networking platform based on the identifier associated with the emotion-associated digital object, such as by predefined rules connecting a type of emotion and a certain identifier.

Method execution is ended at 170. The emotion-associated digital object has been produced and may be, for example, shared or stored or deleted.

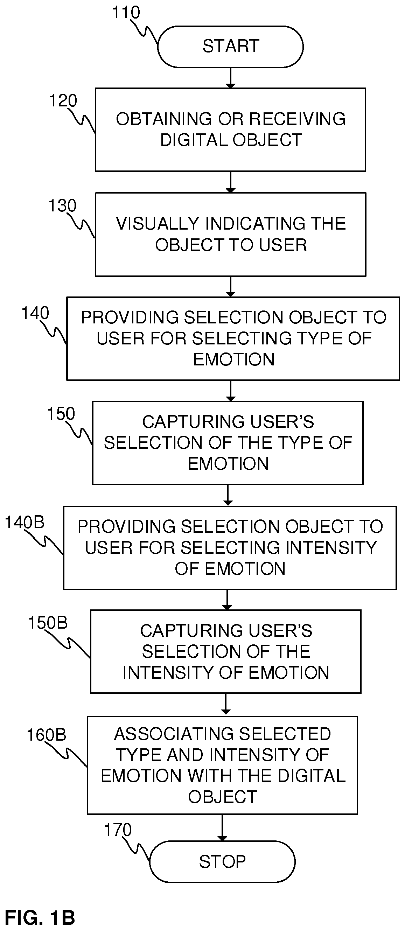

According to an embodiment of the present invention illustrated in Fig. 1B, the method may comprise providing a virtual rotatable selection object to the user via the display for selecting an intensity of emotion 140B from a plurality of predefined levels of intensity of emotion, and capturing a user selection of the intensity of emotion 150B among said plurality of predefined levels of intensity of emotion via the control input interface

According to some embodiment of the present invention, the selection of intensity of emotion may be performed, preferably, after the visually indicating the digital object.

In the method shown in Fig. 1B, the captured selection of the type of emotion and the intensity of emotion may be associated 160B with the obtained or received digital object, wherein the association of the intensity of emotion comprises at least a second identifier, such as the level or the category of the selected intensity of emotion. According to an embodiment of the present invention, the second identifier may be associated with the digital object as metadata or as a visual indication such as a "stamp" on a digital photo. According to an embodiment comprising identifier as metadata, the visual indication of the emotion may be provided by, for example, in a further step at the electronic apparatus or in a social networking platform based on the second identifier associated with the emotion-associated digital object, such as by predefined rules connecting an intensity of emotion and a certain second identifier.

According to an embodiment of the present invention, the selection of the type of emotion and the selection of the intensity of emotion may be performed substantially simultaneously by a virtual selection object suitable for performing such simultaneous selection. According to an embodiment of the present invention, said substantially simultaneous selection may be performed, for example, by tapping a certain position of the virtual selection object thus giving indication about the intensity of emotion.

According to an embodiment of the present invention, the method may comprise, preferably after the obtaining or receiving and prior to the selecting the type of emotion or the intensity, pre-determining at least one of the following: the type of emotion, the intensity of emotion. According to an embodiment of the present invention, the pre-determining may be performed automatically in response to an input from an emotion sensing sensor.

According to an embodiment of the present invention, the pre-determining may be performed, automatically in response to an input from an emotion sensing system or device or by request from the user. The emotion sensing system or device may be such as one based on facial emotion recognition using facial expressions, movement or body gesture emotion recognition, measurement of biosensors monitoring physiological parameters of the body, or determining the type of emotion by a voice recognition technique.

According to an embodiment of the present invention, each one of the plurality of predefined types of emotion may further be represented by a unique predefined color.

According to an embodiment of the present invention, the virtual rotatable selection object comprises a visual indicator arranged in a position around the perimeter of the virtual rotatable selection object for indicating the user's current selection of the type of emotion. The position may, preferably, be one of a plurality of first predefined positions, wherein each one of the first predefined positions corresponds exclusively to one of the plurality of predefined types of emotion.

According to an embodiment of the present invention, the virtual rotatable selection object comprises a visual indicator arranged in a position around the perimeter of the virtual rotatable selection object for indicating the user's current selection of the intensity of emotion. The position may, preferably, be one of a plurality of second predefined positions, wherein each one of the second predefined positions corresponds exclusively to one of a plurality of levels of the intensity of emotion.

According to an embodiment of the present invention, the number of the plurality of first predefined positions and a number of the plurality of second predefined positions may be the same. In addition the above-mentioned positions around the perimeter may be the same.

According to an embodiment of the present invention, the number of the plurality of predefined types of emotion may, preferably, be more than ten or more than fifteen. By having enough predefined types of emotion available for the user to select from, enables precise or exact indication of the actual emotion experienced.

According to an embodiment of the present invention, the method comprises, preferably after the associating, sharing the emotion-associated digital object with other users, for example, by a social networking platform.

According to an embodiment of the present invention, the method comprises, preferably after the sharing, being capable of associating an indication of empathy with the shared emotion-associated digital object.

According to an embodiment of the present invention, the indication of empathy may be associated in similar fashion than the type of emotion and, optionally, the intensity of emotion may be associated to the digital object. A first user may send an emotion-associated digital object to a second user or share it on a social networking platform, to which then the second user may associate the indication of empathy. According to an embodiment of the present invention, the shared emotion-associated digital object may be associated with an indication of a type of emotion corresponding to the type of emotion experienced by the second user in response to the shared emotion-associated digital object or the emotion-causing object represented by the shared emotion-associated digital object. The type of emotion may then be the same or different with respect to the type of emotion associated by the first user. According to one embodiment of the present invention, the indication of empathy may be a counter associated visually or as metadata to the sent or shared emotion-associated digital object. According to one embodiment of the present invention, the counter may be visually presented on the social networking platform and its current count may be obtained among the metadata of the emotion-associated digital object.

According to an embodiment of the present invention, the types of emotion may be disposed on the virtual rotatable selection object such that negative types are on one side and positive types on the other side of the virtual rotatable selection means with respect to a line crossing the center of the virtual rotatable selection means. A detailed justification of the disposition, in particular with regard to the choice of the underlying dimension, is that the disposition such as described above yields a user-friendly approach for selecting the type of emotion and it corresponds naturally to the way humans perceive the types of emotion having different characteristics such that closely related types are disposed close to each other on the virtual rotatable selection object.

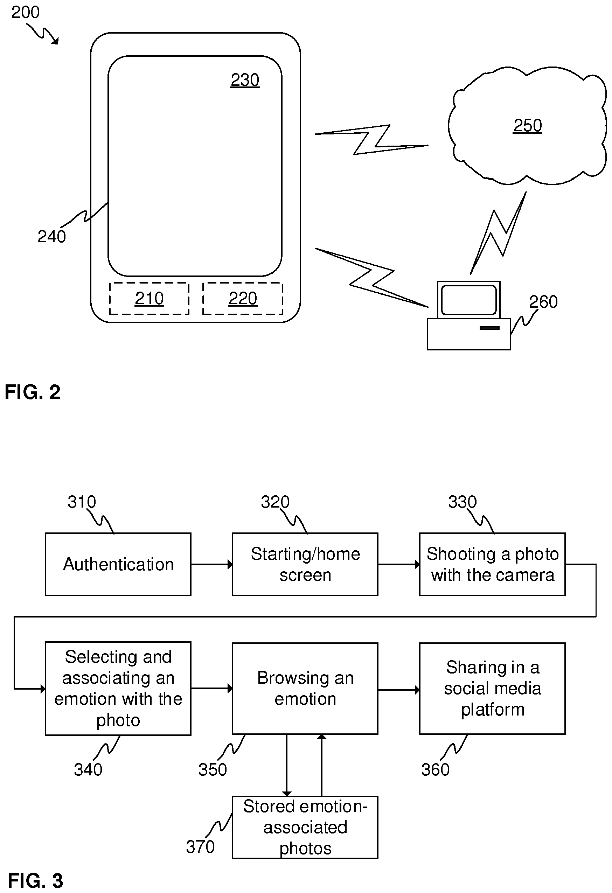

Figure 2 illustrates an electronic apparatus at 200, such as a mobile terminal 200, having a processor 210, a memory 220 and a display 230, such as a touchscreen. According to this particular embodiment of the present invention, the touchscreen functions as a display 230 and a control input interface 240.

According to an embodiment of the present invention, the electronic apparatus 200 may, preferably, comprise communication devices for communicating with a communication network 250, such as the Internet, by means of, for example, wireless communication, for example using Wi-Fi®, Bluetooth®, Near Field Communication™, etc, or in wired manner, for example using Universal Serial Bus, RJ45, etc.

According to an embodiment of the present invention, the electronic apparatus 200 may also be a smart phone, a phablet, a laptop, a personal computer, a holographic display apparatus.

According to an embodiment of the present invention, the method may be implemented at least partly on a computer 260 or computer system 260 in connection to a communication network 250. There may be one or several electronic apparatuses 200 in communication either directly to the computer 260 or the computer system 260 or indirectly via the communication network 250. The computer 260 or the computer system 260 may, preferably, comprise at least one processor and at least one memory, volatile or non-volatile, and may thus be configured to execute at least some of the steps of the method according to an embodiment of the present invention.

Figure 3 illustrates a flow diagram of a method according to an embodiment of the present invention utilizing a smartphone having a camera. At 310, the authentication is requested from and/or given by the user. Users may authenticate or sign up, for example, by using email addresses and/or passwords. The user may select language from the given alternatives. The default language may be, for example, English or the language of the device on which the method is being performed on. Authentication or logging in may be automatic or manual.

At 320, the starting/home screen refers to the screen following the authentication. At 320, when starting the application, a flash of an image is shown for a few seconds, i.e. long enough for the user to be able to be analyze the content of the image. There is a plurality of different images. When the application is being started, one of the plurality of different images is picked randomly and shown to the user via the display along with a color indicating the type of emotion represented by the image. If there are, for example, 6, 12, 16 or 20 different predefined types of emotions, the 6, 12, 16 or 20 images, respectively, describe each one of the predefined types of emotions.

At 320, each one of the images may include the following: a photo of an emotional face, both females and males representing different types of emotions, cultures, and colors, and a box and/or an indicator, preferably partly transparent, having a color corresponding the type of emotion. At 320, the starting screen is then automatically replaced by the home screen having the functionality to shoot a photo with a camera.

At 330, the user may shoot a photo in a camera screen with a camera. The camera screen may use the camera of the smartphone. There may be shooting button, for example, in the bottom of the screen, for example. Changing the front and rear camera, if both included in the smartphone, may be possible by a button, for example, on the bottom left corner of the screen. Changing the flash, i.e. on/off, by a button, for example, on the bottom right of the screen may be possible. There may be instructions to capture the cause for the user's emotion by taking a photo. The user may then direct the camera towards the emoting-causing object or event, and take the photo by clicking the button for taking a photo.

At 340, the user may select a type of emotion corresponding to the perceived reaction to the emotion-causing object or event with the virtual, preferably rotatable, selection object. When the photo has been taken, a symbol appears, for example, in front of the photo. The symbol may be scalable to the size of, for example, 60% of the width of the screen. The photo behind the symbol may get blurred, creating more contrast. At first the symbol is white, indicating that no type of emotion has been selected. On the right bottom corner of the screen, there may, for example, be an action button for deleting the photo taken of the emotion-causing object or event. If the deletion is selected, the photo is being deleted, and the user is being shown the camera screen again.

According to an embodiment of the present invention, the type of emotion corresponding to the perceived emotion in response to an emotion-causing object or event may be selected by rotating the virtual, preferably rotatable, selection object displayed to the user, for example, by a touchscreen. The virtual rotatable selection object may first have instructions such as "no emotion selected" or be first white (no type of emotion selected), as mentioned earlier, corresponding to the user's current "null" selection. The user may rotate the virtual rotatable selection object either clockwise or counter-clockwise.

According to an embodiment of the present invention, color of the virtual rotatable selection object changes according to which type of emotion is currently being selected or active. According to an embodiment of the present invention, the user may rotate, or swipe in rotatable or curved manner, the virtual rotatable selection object once in order to changes the type of emotion to the next or previous type. According to another embodiment of the present invention, each one of the types of emotion is disposed on the virtual rotatable selection objects such that, depending on the number of the plurality of predefined types of emotion, rotating the virtual rotatable selection object, clockwise or counter-clockwise, certain amount of degrees, less than or equal to 180 degrees, changes the current selection of the type of emotion. For example, in case of 20 of predefined types of emotion, said certain amount of degrees is 18 degrees.

According to an embodiment of the present invention, corresponding amount of colors of the visible light spectrum to represent the types of emotion may be used. The exact colors may, preferably, been predefined.

The symbol may be rotated on the touchscreen by swiping motion. When the symbol starts rotating, the help text changes to instruct the user to select an emotion by (double-)tapping the symbol. Rotating the symbol changes the type of emotion described by at least the unique name, and optionally the color of the symbol, as text, for example, above the symbol.

According to an embodiment of the present invention, when the symbol is, for example, rotated clockwise, emotions with a positive valence, which may be, for example, disposed on the right side of the vertical line crossing the center of the virtual rotatable selection object, such as, interest, amusement, pride, joy, pleasure, contentment, love, admiration, relief, compassion, are shown one at a time. When the symbol is being rotated counter-clockwise, emotions with a negative valence disposed on the left side of the vertical line crossing the center of the virtual rotatable selection object, are shown one at a time, such as anger, hate, contempt, disgust, fear, disappointment, shame, regret, guilt, sadness. When the last emotion with positive or negative valence is being reached, the emotions with opposite valence are shown, thus, all types of emotions may be reached no matter to which direction the symbol is being rotated.

According to an embodiment of the present invention, there may be, for example, a corresponding number of visual indicators or little circles encircling or disposed around the perimeter of the virtual rotatable selection object or the symbol. The colors of the visual indicators or the little circles are the colors of the corresponding types of emotion, for example, clockwise from interest to anger.

According to an embodiment of the present invention, the visual indicators or the little circles may be partly transparent, for example, having default opacity of 30%. When a certain type of emotion is active, the corresponding visual indicator or the little circle is shown in full color (opacity 100%). These visual indicators or the little circles give the user a general view of the number of the type of emotions, and the one that is active in any moment.

According to an embodiment of the present invention, when the active emotion corresponds the actual emotion of the user, she/he chooses that emotion by (double-)tapping the symbol, after which the emotion is locked. When clicking the symbol, the type of emotion and, for example, time and place (GPS coordinates) may be "stamped" to the photo as metadata or as a visual indication. This may be configured to be reversible or irreversible.

At 350, the user may browse and/or share the emotion-associated digital photo comprising a visual indication of the type of emotion with a unique name and, optionally, a unique color describing the type of emotion, for example "joy" or "disappointment" with corresponding predefined colors. There may also be at least one of the following comprised in the visual indication: a place (town and/or country), time (for example 7:27 PM), date (for example 2016-08-03, universal date format).

According to an embodiment of the present invention, separate buttons for sharing the emotion-associated digital photo on external social-media platforms (e.g. Facebook®, Instagram®, and Twitter® or other platforms). There may also be a button for deleting the photo, and for getting back to the camera screen, for example, on the bottom right corner.

According to various embodiment of the present invention, if the user has obtained or received the photo via the camera, there may be a link via which the user may change back into to the camera screen without deleting the photo (the emotion-associated photo may be obtained later from a storage of previously taken emotion-associated photos). If the user has obtained the emotion-associated photo from the said storage, there may be a link via which the user may move back to the storage screen (the emotion-associated photo won't be deleted). According to an embodiment of the present invention, the said links may be disposed on the screen or arranged under a menu selection.

At 360, the user may share the emotion-associated photo on an external social media platform. The sharing may be performed on the same screen at which step 350 resulted in or in a separate sharing screen. When the photo is shared on any external social media platform, the visual indication may be "stamped" to the image itself latest at this point.

The storage of previously taken emotion-associated photos, at 370, may be reached from the menu by the user, for example labeled as "My emotions". The screen may be a kind of personal emotion diary for the user, and a place, where the stored emotion-associated photos may be browsed or obtained.

In the storage screen there may be shown as a default option five of the most recently stored emotion-associated photos. There may also be a button for opening, for example, five photos older than the most recently stored emotion-associated photos at a time.

According to an embodiment of the present invention, every emotion-associated photo or object in the storage may include elements such as a small size square photo, an emotion symbol and a word describing the emotion, and at least one of the following: the intensity of the emotion, place (town and country), time and date, for example "7:59 PM, 2016-08-02".

According to an embodiment of the present invention, opening a single emotion-associated photo or object, the photo or object may be shared or shared again to any supported external social media platform.

According to an embodiment of the present invention, the may also be other screens available to the user via the menu. The other screens may be, for example, profile information including the user information, the email address and the password. The information may include first name, last name, date of birth, gender, language, home town and home country. There may also be a screen for privacy policy.

According to an embodiment of the present invention, the method may comprise selecting an intensity of emotion perceived by the user in response to an emotion-causing object or event. According to an embodiment of the present invention, when a type of emotion has been selected, the intensity selection becomes active. Similar virtual, preferably rotatable, selection object may be utilized in the selection of the intensity as for the selection of the type of emotion. The selection object may also be linear type of selection object having, for example zero or one at the one end and 100 at the other end of the linear selection object.

According to an embodiment of the present invention, when the type of emotion has been selected, the visual indicators or the circles around the perimeter of the virtual, preferably rotatable, selection object disappear and only the selected type of emotion is visible by at least the unique name and, optionally the color, of the type of emotion. After that there may be instructions for the user to browse the intensity of your emotion by rotating the symbol. According to an embodiment of the present invention, new visual indicators or circles may appear around the perimeter of the virtual, preferably rotatable, selection object for indicating the scale for the intensity of emotion. The number of the visual indicators or circles may be the same or different with respect to the selection object for the type of emotion. The positions of the visual indicators or circles may also be the same or different with respect to the positions of the selection object for the type of emotion. The intensity level may be selected by (double-)tapping the virtual, preferably rotatable, selection object.

According to an embodiment of the present invention, rotating the virtual, preferably rotatable, selection object changes the intensity level. There may be, for example, 6, 12, 16 or 20 little circles encircling the virtual, preferably rotatable, selection object. The color of every circle may, preferably, be the color of the selected type of emotion. It may also be different. At first all the little circles may be invisible. When rotating the virtual, preferably rotatable, selection object clockwise, they start to become visible one by one. The appearing circles may still be partly transparent, their opacities ranging from, for example, 30% to 100% when going clockwise through the circles, for example, such that the percentage corresponding to each of the levels may be as follows in case of 20 different levels: 30%, 34%, 37%, 41%, 45%, 48%, 52%, 56%, 59%, 63%, 67%, 71%, 74%, 78%, 82%, 85%, 89%, 93%, 96%, 100%. Thus, the more there are intensity circles visible, the stronger the intensity. The growing opacity at the same time describes the growing intensity so that there may be 20 intensity levels the user can select from. If all the circles are visible, the intensity is the strongest possible.

According to an embodiment of the present invention, there may also be 5 categories and at least their corresponding names/words describing the intensity of the emotion. For example, in case of 20 different levels of intensity, when going clockwise, circles 1-4 may correspond, for example, to a category "Very Low", circles 5-8 to a category "Low", circles 9-12 to a category "Medium", circles 13-16 to a category "High", and circles 17-20 to the category "Very High". Thus, there may be in addition to a precise or exact selection for the intensity of emotion, more approximate selection represented, for example, such categories as described above. It's thus not necessary for the user to ponder the exact number from 1 to 20, as the tool may be more like an intuitive method for selecting the intensity by a hunch, or gut feeling, i.e., the category name/word gives a rougher information about the intensity. The category name/word may be shown, for example, above the virtual, preferably rotatable, selection object when the user rotates said object and goes through different circles around the perimeter of the virtual, preferably rotatable, selection object.

According to an embodiment of the present invention, when using multiple languages, the types of emotions may be translated automatically from any supported language to any other supported language, so that every user sees the types of emotions in her/his own language.

According to an embodiment of the present invention, the digital object 410A may be a jpg-photo taken by the camera of the mobile phone. The digital object 410A may also be an image or a photo, a video, an audio, a uniform resource locator, a push notification, a message, a piece of news, a hologram, a multimedia presentation, or a digital audio player gadget.

According to an embodiment of the present invention, metadata of each of the emotion-associated objects may include the following: a type of emotion (for example, 1 out of 20 available), an intensity of emotion (for example, 1 out of 20 available, and optionally, a category), date and time, GPS coordinates/town/country.

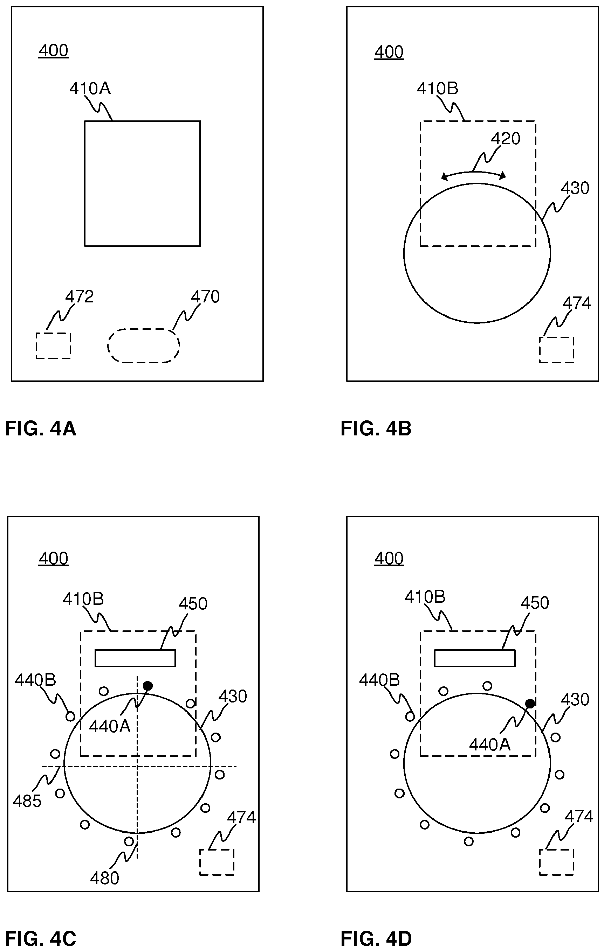

Figures 4A-4D illustrate some steps of an embodiment of the present invention. In Fig. 4A, the emotion-causing object 410A is being displayed on the screen 400. The screen 400 may take at least part of the total area of the display 230.

There may also be a virtual button for taking a photo 470 and/or a virtual button for switching between two cameras 472.

Figure 4B illustrates the step after the user has been taken the photo with a camera, such as one of the cameras of a smartphone. The digital photo representing the emotion-causing object 410B has now been blurred, which is indicated in the figure by dashed lines. The user may then be provided with a virtual rotatable selection object 430 on the screen 400 of the display 230. There may be instructions for the user to rotate 420 the virtual rotatable selection object 430.

Figure 4C illustrates the selection of the type of emotion according to an embodiment of the present invention. There may be visual indicators or circles 440A, 440B around the perimeter of the virtual rotatable selection object 430 for indicating the current selection of the type of emotion 440A. The number of the visual indicators corresponds to the number of predefined types of emotion. Types of emotion not currently selected are illustrated by reference number 440B. There may be visual indication of the type of emotion currently selected 450, such as by text and, optionally, color representing the type of emotion. There may be lines 480, 485 crossing the virtual, preferably rotatable, selection object 430, which may be visible or invisible. According to an embodiment of the present invention, there may be a vertical 480 or a horizontal 485 line on one side of which there are negative types of emotion and on the other side positive types of emotions. Figure 4D further illustrates the indication of the currently selected type of emotion when the user rotates the virtual rotatable selection object 430 clockwise. The name of the currently selected type of emotion 450 which may be shown on the screen 400 changes essentially simultaneously when rotating the virtual rotatable selection object 430.

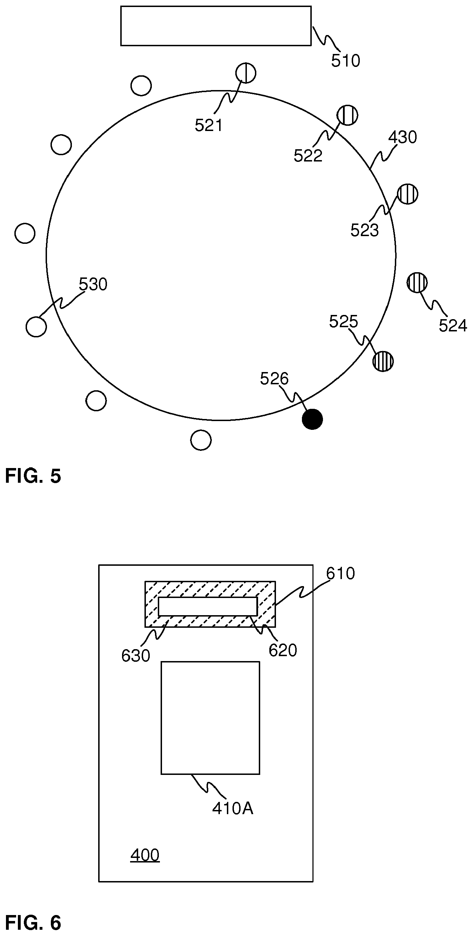

Figure 5 illustrates the selection of the intensity of emotion according to an embodiment of the present invention. The virtual selection object is being provided to the user via the display 230. The provided object may be similar virtual rotatable selection object 430 as in the case of selecting the type of emotion. The number of levels of intensity of emotion may be the same or different with respect to the number of predefined types of emotion. In Fig. 5, there are 12 levels of intensity of emotion. The currently selected intensity is indicated by reference number 526. According to an embodiment of the present invention, the intensity may further be illustrated by varying the opacity of the visual indicators up to the selected intensity as shown in Fig. 5 from 521 to 526. The number of vertical lines inside the visual indicator or the circle represents opacity of the color of the indicator or circle. According to various embodiments of the present invention, the color of the visual indicator or the circle may be the same as the predefined color of the selected type of emotion.

According to an embodiment of the present invention, there may be a visual indication 510 for indicating, such as by text, the user of the current selection of the intensity. According to another embodiment of the present invention, there may be an approximate description of the level of intensity indicated by the visual indication 510. In Fig. 5, 12 different intensity levels may be divided into, for example, different approximate levels such as so that 3 of the consecutive levels may be indicated by one approximate description and thus for one approximate level, yielding 4 approximate levels in addition to 12 more exact levels.

Figure 6 illustrates a visual indication or an identifier 610 associated with the digital object, such as a digital photo representing the emotion-causing object 410A. The digital photo may be the total size of the screen 400 although the emotion-causing object is illustrated only in part of the photo. The visual indication or the identifier 610 may include the name of the type of emotion 620 and, optionally, the predefined color 630 of the selected type of emotion. According to some embodiments of the present invention, the selected level of the intensity of emotion may also be comprised in the visual indicator or the identifier 610 or it may be associated with the digital object, such as a digital photo, alternatively or in addition, as metadata.

According to some embodiments of the present invention, in which emotion-related information is being associated with the digital object 410A as metadata, the metadata may be used later, for example, after sharing the emotion-associated digital object in a social networking platform, to associate a visual indication or indications based on defined rules according to which the social networking platform has been configured to operate.

According to an embodiment of the present invention, the sharing may comprise transmitting emotion-associated digital object via a communication network for one of the following: publishing on a social networking platform, sending via email, sending as a digital short message, such as on an instant messaging platform, e.g. WhatsApp®, or as a text message.

According to an embodiment of the present invention, an embodiment of the method may be implemented on a smartphone comprising iOS® 9 or newer on iPhone® 5 or newer or Android® 5 or newer operating system. Preferably, the smartphone may be configured to be able to connect to an Internet during the use of the application executing the method according to an embodiment of the present invention.

According to an embodiment of the present invention, the present invention is a social networking platform utilizing the method according to an embodiment of the present invention providing a shared emotion-associated digital object as described above.

According to an embodiment of the present invention, the emotion-associated digital objects with which location-information is also associated with may be utilized such that a map tool may be configured to display different emotion-associated digital objects in different regions on the map. The map tool may, advantageously, be part of a social networking platform. A user of the social networking platform may select a region and is then shown the shared emotion-associated digital objects associated in that region. The platform may also show to the user statistics related to the different types of emotions and intensities of emotions in that region. The user may, alternatively or in addition, choose a time range during of interest. The user is then shown the emotion-associated digital objects shared or created during the time range and/or in the region. There may be different filters with which the user may limit the search according to appropriate parameters.

According to an embodiment of the present invention, the present invention may be implemented as a computer program product comprising program code means adapted to execute the method steps or items of the method according to various embodiments of the present invention when the program is run on a computer. According to an embodiment of the present invention, a non-transitory computer-readable medium comprising said computer program product may be utilized to realize an embodiment of the present invention.

According to an embodiment of the present invention, a computer system comprising at least one processor, and at least one memory storing at least one portion of computer program code may be utilized to implement various embodiments of the present invention. The at least one processor may be configured to cause the computer system at least to perform the steps or items according to various embodiments of the present invention.

According to an embodiment of the present invention, an electronic apparatus, such as a mobile terminal, comprising a processor, a memory, a control input interface and a display may be utilized to implement various embodiments of the present invention by configuring the processor to execute the method according to various embodiments of the present invention.

Features described in the preceding description may be used in combinations other than the combinations explicitly described. Although functions have been described with reference to certain features, those functions may be performable by other features whether described or not. Although features have been described with reference to certain embodiment of the present inventions, those features may also be present in other embodiment of the present inventions whether described or not.

## Claims

1. A method, to be performed on an electronic apparatus (200), for associating a visual indication (610) of an emotion experienced by a user in response to an emotion-causing object or event with a digital object (410A) representing the emotion-causing object or event, the method comprises
obtaining or receiving (120; 330) the digital object (410A) at the electronic apparatus (200) comprising at least a processor (210), a memory (220), a control input interface (240) and a display (230),
visually indicating (130) the obtained or received digital object (410A) to the user via the display (230),
providing (140) a virtual rotatable selection object (430) to the user via the display (230) for selecting a type of emotion from a plurality of predefined types of emotion, wherein each one of the plurality of predefined types of emotion is represented at least by a unique name of the type of emotion,
capturing (150) a user selection of the type of emotion among said plurality of predefined types of emotion via the control input interface (240), and
associating (160) the captured user selection of the type of emotion with the obtained or received digital object (410A), wherein the association comprises at least an identifier (450), such as the unique name, of the selected type of emotion.

2. A method according to claim 1, comprising
providing (140B) a virtual rotatable selection object (430) to the user via the display (230) for selecting an intensity of emotion from a plurality of predefined levels of intensity of emotion,
capturing (150B) a user selection of the intensity of emotion among said plurality of predefined levels of intensity of emotion via the control input interface (240), and
associating (160B) the captured user selection of the intensity of emotion with the obtained or received digital object (410A), wherein the association of the intensity of emotion comprises at least a second identifier, such as the level or the category of the selected intensity of emotion.

3. A method according to any one of the preceding claims, comprising, after the obtaining or receiving (120) and prior to the providing a virtual rotatable selection object (140; 140B) to the user via the display for selecting the type or the intensity of the emotion, pre-determining at least one of the following: the type of emotion, the intensity of emotion.

4. A method according to any one of the preceding claims, wherein the associating (160; 160B) comprises associating by at least one of the following: as metadata of the digital object, as integrated into a data structure of the digital object, such as into a bitmap image.

5. A method according to claim 3, wherein the pre-determining is performed automatically in response to an input from an emotion sensing device.

6. A method according to any one of the preceding claims, wherein the virtual rotatable selection object (430) comprises a visual indicator (440A) arranged in a position around the perimeter of the virtual rotatable selection object (430) for indicating the user's current selection of the type of emotion, wherein the position (440A) is one of a plurality of first predefined positions (440A, 440B), wherein each one of the first predefined positions (440A, 440B) corresponds exclusively to one of the plurality of predefined types of emotion.

7. A method according to any one of the preceding claims, wherein the obtaining or receiving (110) comprises obtaining or receiving (110) the digital object (410A) as or along with at least one of the following: an image or a photo (410A), a video, an audio, a uniform resource locator, a push notification, a message, a piece of news, a hologram, a multimedia presentation.

8. A method according to any one of the preceding claims, wherein the number of the plurality of predefined types of emotion is more than ten.

9. A method according to any one of the preceding claims, comprising, after the associating (160; 160B), sharing the emotion-associated digital object with other users.

10. A method according to claim 9, wherein the sharing the emotion-associated digital object (410A) comprises transmitting said object (410A) via a communication network (250) for one of the following: publishing on a social networking platform, sending via email, sending as a digital short message.

11. A method according to any one of the preceding claims, wherein the types of emotion are disposed on the virtual rotatable selection object such that negative types are on one side and positive types on the other side of the virtual rotatable selection means with respect to a line crossing the center of the virtual rotatable selection means.

12. A computer program product comprising program code means adapted to execute the method items of any of claims 1-11 when the program is run on a computer.

13. A non-transitory computer-readable medium comprising the computer program product of claim 12.

14. A computer system (260) comprising at least one processor, and at least one memory storing at least one portion of computer program code, wherein the at least one processor being configured to cause the computer system (260) at least to perform the steps according to any one of the claims 1-11.

15. An electronic apparatus (200), such as a mobile terminal (200), comprising a processor (210), a memory (220), a display (230) and a control input interface (240), the processor (210) being configured to execute the method according to any one of the claims 1-11.
